# EUROPÄISCHE PATENTSCHRIFT

(11) **EP 0 786 557 B1**
(45) Veröffentlichungstag und Bekanntmachung des Hinweises auf die Patenterteilung: **03.07.2002**
(21) Anmeldenummer: 97100573.1
(22) Anmeldetag: 16.01.1997
(51) Int. Cl.: E01F 8/00, H01L 31/042

(54) **Schallschutzelement für Lärmschutzwände und Verfahren zu dessen Herstellung**
Sound absorbing element for soundbarrier and method of manufacturing the same
Elément d'isolation acoustique pour mur anti-bruit et son procédé de fabrication

(30) Priorität: 26.01.1996 DE 19602653
(43) Veröffentlichungstag der Anmeldung: 30.07.1997
(73) Patentinhaber: Röhm GmbH & Co. KG, 64293 Darmstadt (DE); Angewandte Solarenergie - ASE GmbH, 85640 Putzbrunn (DE)
(72) Erfinder: Schöla, Egbert Dr., 7052 Müllendorf (AT); Gütlbauer, Franz Dr., 2500 Baden (AT); Brand, Norbert Dr., 64291 Darmstadt (DE); Schneider-Gmelch, Brigitte, 63755 Alzenau (DE); Luthardt, Günther Dr., 63517 Rodenbach (DE); Rübel, Herbert Dr., 81739 München (DE)

(56) Entgegenhaltungen:
- EP-A- 0 474 349
- DE-A- 3 741 485
- DE-A- 4 026 165
- DE-A- 4 219 075
- DE-A- 4 427 881

## Beschreibung

Die vorliegende Erfindung betrifft ein Schallschutzelement für Lärmschutzwände mit im Inneren des Schallschutzelementes angeordneten photovoltaischen Elementen (PV-Elementen), wobei das Schallschutzelement aus Kunststoffglas besteht, eine Dicke im Bereich von 10 bis 30 mm und eine Größe im Bereich von 1 x 2 m und größer aufweist. Die Erfindung offenbart ebenfalls ein Verfahren zur Herstellung solcher Schallschutzelemente.

Transparente Schallschutzelemente können aus Kunststoffglasscheiben bestehen, welche mit geeigneten Befestigungsvorrichtungen zu Schallschutzwänden verbunden werden können. Transparente Schallschutzelemente werden in zunehmendem Maße in Bereichen eingesetzt, in denen es gilt, die Lärmschutzmaßnahmen möglichst unauffällig durchzuführen. Dies ist insbesondere auf Brücken und im innerstädtischen Bereich erforderlich. Solche transparenten Lärmschutzwände werden insbesondere aus Polymethylmethacrylat (PMMA) gefertigt bzw. aus auf PMMA basierenden Formmassen, da dieses Material eine hervorragende Transparenz und optische Eigenschaften sowie eine gute Schalldämmung bei guten physikalisch-mechanischen Eigenschaften (Steinwurfresistenz) hat. Aus dem DE-U 90 10 087.5 ist bekannt, daß in Kunststoffglasscheiben, die gleichzeitig ein einzelnes Schallschutzelement darstellen, Kunststoffäden eingezogen sein können, die im Falle eines Bruches der Kunststoffglasscheibe die einzelnen Bruchstücke halten und am Herabfallen hindern können.

Aus der DE-A 42 19 075 kennt man Schallschutzwände aus Kunststoffglas, die darin eingebettet mindestens ein Energiegewinnungselement enthalten, das zur Solarenergiegewinnung geeignet ist. Die Elemente können photovoltaische Elemente sein, oder sie sind für die Gewinnung von Wärmeenergie ausgelegt. Die photovoltaischen Elemente (kurz: PV-Elemente) sowie Solarmodule werden u. a. in PMMA eingegossen, um sie gegen Umwelteinflüsse zu schützen und handhabbar zu machen. Bei der Herstellung der Kunststoffglasscheiben gemäß der DE-OS 42 19 075 können die Energiegewinnungselemente durch Einbettung beim Formenbau, durch Eingießen oder auch durch nachträgliche Bearbeitung, wie Auf- oder Verkleben mit den Kunststoffglasscheiben, mit diesen verbunden werden. Unter Einbettung, Eingießen sowie Kleben wird dabei entweder die Einpolymerisation der einzelnen Elemente direkt in die zur Scheibenherstellung verwendete Formmasse verstanden oder das Einpolymerisieren von vorher angefertigten Verbänden, wobei Vorgruppierungen durch Einlegen einer Mehrzahl von Modulen oder Zellen in Kunststoffolien entstehen oder durch Verknüpfungen mittels geeigneter Fäden oder Drähte als in Form gebrachte Mehrzahl von Energiegewinnungselementen einpolymerisiert werden.

So vorteilhaft die aus der DE-A 42 19 075 bekannten Schallschutzwände mit integrierten, d. h. durch Einpolymerisation eingebetteten und eingegossenen Energiegewinnungselementen gegenüber dem vorbekannten Stand der Technik, insbesondere der DE-OS 40 26 165, auch waren, so weisen sie für den praktischen Gebrauch immer noch erhebliche Nachteile auf.

Kunststoffglasscheiben aus PMMA zu Schallschutzmaßnahmen haben üblicherweise Plattengrößen von 1 x 2 bis 2 x 3 m, während die einzelnen darin eingegossenen Solarmodule oder PV-Elemente eine sehr viel kleinere Fläche aufweisen. Dies führt dazu, daß i. d. R. eine größere Zahl von einzelnen PV-Elementen oder Solarenergiegewinnungselementen in einer 2 x 3 m großen Platte eingegossen und zusammengeschaltet sind. Wenn nun eines der Solarmodule defekt ist, so ist damit die ganze Platte unbrauchbar und muß ersetzt werden. Aus ökonomischen Gründen wäre es jedoch sehr wünschenswert, eine Reparaturmöglichkeit für defekte Einzelmodule vorzusehen, ohne das Lärmschutzelement zerstören zu müssen. Im jetzigen Stand der Technik bleibt jedoch nur der Komplettaustausch einer ganzen Platte, die durchaus noch eine Vielzahl von funktionsfähigen PV-Elementen enthält.

Wenn aber doch einmal eine vollständige Platte zu ersetzen ist, so wäre es weiterhin von Vorteil, wenn die eingesetzten Materialien einer sinnvollen Wiederverwendung zuführbar wären. Zwar ist die Recyclierung ohne Down-Cycling von PMMA-Produkten prinzipiell auf dem Wege der Depolymerisation möglich, der Wertstoff "photovoltaisches Element" findet sich jedoch im Abfall, der in oder auf der Schmelze des Metallbades bei der Depolymerisation der Platten anfällt. Eine Vermeidung des Abfallanfalles bei der Depolymerisation des PMMA ist als sehr sinnvoll anzusehen.

Weiters ist das Einbetten durch Eingießen und Auspolymerisieren an sich ein recht diffiziler und komplizierter Vorgang, wobei zwar das Rostero-Verfahren einen großen Fortschritt darstellte, eine noch wirtschaftlichere Verfahrensweise für eine industrielle Fertigung von Lärmschutzelementen aus Kunststoffglas im Stand der Technik jedoch bislang nicht vorhanden ist.

Schließlich muß bei den aus dem Stand der Technik bekannten Lärmschutzwänden mit integrierten Modulen ein hoher Aufwand betrieben werden, um Inkompatibilitäten zwischen Matrix aus Kunststoffglas und eingebetteten, also einpolymerisierten Solarmodulen zu vermeiden. Die Inkompatibilität äußert sich dabei insbesondere in Spannungsrißbildungen, die zur Zerstörung der Lärmschutzelemente führen können. Entweder sind die Ausdehnungskoeffizienten der Materialien (PMMA-Gußglas und PV-Zellen) aufeinander abzustimmen, was nicht in jedem Falle möglich ist, und/oder es sind Vermittlungsschichten (Verbundfolien) aus beispielsweise EVA oder Polyvinylbutyral (PVB) zwischen Modul und umgebendem Kunststoffglasscheibenmaterial vorzusehen.

Angesichts des hierin genannten und diskutierten Standes der Technik lag der Erfindung damit die Aufgabe zugrunde, bekannte Lärmschutzelemente für Lärmschutzwände mit eingebetteten Solarenergiegewinnungselementen, insbesondere PV-Elementen, so weiterzuentwickeln, daß sie leichter zu fertigen, einfacher zu reparieren und sauberer zu recyclieren sind, ohne dabei die Vorteile der Schallschutzelemente oder Schallschutzplatten aus PMMA mit eingebetteten Solarmodulen, nämlich geringe Bruchgefahr mit verbesserter Splitterbindung, hohe Energieausbeute, geringes Flächengewicht sowie eine in allen Belangen ausreichende Schalldämmung, aufzugeben. Ferner war es eine Aufgabe der Erfindung, ein Verfahren zur Herstellung solcher Lärmschutzelemente anzugeben.

Gelöst werden die genannten sowie weitere nicht im einzelnen aufgezählte Aufgaben durch ein Schallschutzelement für Lärmschutzwände mit den Merkmalen des kennzeichnenden Teils von Anspruch 1. Vorteilhafte Ausgestaltungen der erfindungsgemäßen Schallschutzelemente sind Gegenstand der auf Anspruch 1 zurückbezogenen Ansprüche. Im Hinblick auf das Verfahren stellt Anspruch 11 eine Problemlösung zur Verfügung. Vorteilhafte Verfahrensmodifikationen werden in den auf den unabhängigen Verfahrensanspruch rückbezogenen Verfahrensansprüchen unter Schutz gestellt.

Dadurch, daß das Schallschutzelement aus zwei oder mehr aufeinandergelegten lösbar miteinander verbundenen Kunststoffglasscheiben besteht, zwischen die die photovoltaischen Elemente (PV-Elemente) lose eingelegt und durch die Verbindung der Scheiben fixiert sind, gelingt es in nicht ohne weiteres vorhersehbarer Weise,
a) eine "Trennung" der photovoltaischen Elemente und der sie umgebenden Kunststoffglasscheiben zu erreichen und so die Bildung von Spannungsrissen zu verhindern;
b) die Reparaturfreundlichkeit von Lärmschutzwänden aus Lärmschutzelementen aus Kunststoffglasscheiben deutlich zu verbessern, weil z. B. auch einzelne photovoltaische Elemente austauschbar sind, ohne daß die Lärmschutzelemente als solche unbrauchbar werden;
c) eine wirtschaftlichere Herstellung als durch eine Einpolymerisation im Gießverfahren möglich zu verwirklichen;
d) darüber hinaus auch die Verwendung einer Kombination von Gußglas und Extrusionsglas oder auch von reinem Extrusionsglas zu ermöglichen, wo ansonsten ein Einpolymerisieren beim Herstellungsprozeß (z. B. nach dem Rostero-Verfahren) immer an die Verwendung von Gußglas gebunden war; und
e) eine vollständige Trennung der Wertstoffe PV-Element und Kunststoffglas durchzuführen und hierbei beide Wertstoffe einem separaten Wiederaufbereitungskreislauf zuzuführen.

Im Rahmen der Erfindung werden die in ein Schallschutzelement zu integrierenden PV-Elemente lose zwischen zwei miteinander zur Ausbildung des Schallschutzelements zu verbindenden Kunststoffglasscheiben angeordnet und erst durch die Verbindung der Scheiben miteinander so fixiert, daß die relative Anordnung einzelner PV-Elemente zueinander im wesentlichen fest ist, die einzelnen PV-Elemente jedoch genügend Raum haben, so daß ein Auftreten von Spannungsrissen durch unterschiedliche Ausdehnungskoeffizienten von PV-Element und Kunststoffglasscheibe vermieden wird.

Bei den zum Schallschutzelement der Erfindung zu verbindenden Kunststoffglasscheiben handelt es sich um solche aus Polymethylmethacrylat PMMA oder Polycarbonat PC, wobei die Gesamtdicke der zum Schallschutzelement zu verbindenden Platten üblicherweise im Bereich von 10 - 30 mm, insbesondere 15 - 25 mm, und bei Plattengrößen von 1 x 2 m und größer liegt. Bevorzugt sind Größen bis 2 x 3 m für Gußglas. Darüber hinausgehende Größen lassen sich für Extrusionsglas verwirklichen. Besonders bevorzugt ist die Basis für die Kunststoffglasscheiben PMMA. Das PMMA bzw. die im wesentlichen auf PMMA basierende Formmasse ermöglicht im fertigen Glas eine sehr hohe Lichttransmission von ca. 92 %. Die Kunststoffglasscheiben sind leicht zu reinigen, sie sind witterungs- und korrosionsbeständig sowie beständig gegen Tausalzeinwirkung. Steinwürfe und sonstige übliche Beeinträchtigungen werden ebenfalls ohne größere Beschädigungen überstanden. Außerdem ist das Material, insbesondere Polymerisat von MMA, verträglich mit den üblichen photovoltaischen Elementen.

Die Verbindung der wenigstens zwei Kunststoffglasscheiben, zwischen die erfindungsgemäß die PV-Elemente eingelegt sind, kann grundsätzlich auf verschiedene Weise erfolgen, solange gewährleistet ist, daß die miteinander verbundenen Kunststoffglasscheiben für die Verwendung als Schallschutzelement belastbar genug sind und sofern die eingelegten PV-Elemente ausreichend am gewünschten Ort fixiert sind.

In einer bevorzugten Variante werden die Kunststoffglasscheiben miteinander verklebt. Hierzu finden beispielsweise entsprechende Klebefolien der Glas- und Photovoltaikindustrie Verwendung, die aus PVB, EVA oder Ionomerfolien bestehen können. Es ist u. a. möglich, die Kunststoffglasscheiben nur in den Randbereichen miteinander zu verkleben, es ist jedoch genausogut möglich, auch andere von PV-Elementen nicht ausgenutzte Flächenteile der Kunststoffglasscheiben für die Verbindung der Scheiben heranzuziehen. Hierzu geeignete Kleber und Folien ergeben zweckmäßig transparente Verbindungen.

In bevorzugter Ausführungsform werden die Kunststoffglasscheiben mit dazwischengelegten PV-Elementen thermisch verklebt. Hierzu kommen entsprechende Kleber oder Folien zum Einsatz, die bevorzugt transparente Verbindungen ergeben, wobei die Verbindung durch geeignete Maßnahme (Temperatur, Lösemittel, etc.) lösbar ist.

Da die PV-Elemente im Vergleich zu den verwendeten Kunststoffglasscheiben eine relativ geringe Dicke haben, üblicherweise liegt die Dicke von PV-Elementen im Bereich von 1 - 9 mm, ist es genauso möglich, die Glasscheiben mit mechanischen Befestigungsmitteln, wie Schrauben, Bolzen oder Nieten, dauerhaft miteinander zu verbinden, wobei die eingelegten PV-Elemente klemmend fixiert werden. In einem solchen Fall ist es dann bevorzugt, die Randbereiche der aufeinandergelegten Kunststoffglasscheiben abzudichten. Dies kann beispielsweise mit einer Gießharzmischung auf PMMA-Basis oder mit einer Folienabdichtung aus geeigneten Materialien geschehen.

Wie bereits ausgeführt, ist es prinzipiell möglich, die PV-Elemente einfach durch aufeinandergelegte Kunststoffglasscheiben klemmend zu fixieren. Besonders vorteilhaft ist es jedoch, wenn für die PV-Elemente nicht nur im Hinblick auf Länge und Breite sondern auch im Hinblick auf die Dicke ein Zwischenraum zur Verfügung gestellt wird, der zum Ausgleich von unterschiedlichen Ausdehnungskoeffizienten von PV-Element und Kunststoffglasscheibenmaterial geeignet ist.

In besonders bevorzugter Ausführung kennzeichnet sich das Schallschutzelement der Erfindung daher dadurch, daß in wenigstens einer der Oberflächen, die beim Verbinden der Kunststoffglasscheiben aufeinanderliegen, Aussparungen oder Vertiefungen zur Aufnahme der PV-Elemente vorgesehen sind.

Solche Hohlräume zur Aufnahme der PV-Elemente lassen sich beispielsweise durch Fräsen nachträglich in Kunststoffglasscheiben aus Gußglas einbringen. Andererseits sind solche Ausnehmungen auch durch Heißbearbeitung von Extrusionsglas anzufertigen.

Besonders zweckmäßig ist eine Ausführungsform, bei der zwischen zwei Kunststoffglasscheiben eine zur Aufnahme von PV-Elementen angepaßte Schablone aus Kunststoffglas eingelegt ist. Die Schablone aus Kunststoffglas kann im Rahmen der Erfindung beispielsweise die Form eines Gitters mit Ausnehmungen oder Durchbrechungen aufweisen, wobei die Ausnehmungen bzw. Durchbrechungen an die Größe der PV-Elemente angepaßt sind. Besonders bevorzugt ist die Dicke des Rahmens oder Gitters aus Kunststoffglas in etwa genauso groß wie die Dicke der PV-Elemente.

Da Kunststoffglasscheiben in Schallschutzwänden üblicherweise senkrecht stehen, ist es sinnvoll, die einzelnen photovoltaischen Elemente geneigt zur vertikalen Ebene (um eine in der Scheibenebene liegende Horizontalachse gedreht) zu fixieren, wobei der Winkel so gewählt sein soll, daß aufgrund des veränderlichen Sonnenstandes gegenüber dem Horizont eine möglichst hohe Ausbeute der eingestrahlten Sonnenenergie erreicht wird. Dies gelingt beispielsweise durch Vorsehung entsprechender Ausnehmungen in einer oder in beiden der zu verbindenden Kunststoffglasscheiben. Da außerdem die Kunststoffglasscheiben in Lärmschutzwänden entsprechend dem Aufstellungsort in verschiedene Himmelsrichtungen weisen können, ist es weiterhin sinnvoll, die einzelnen photovoltaischen Elemente in ihnen je nach Aufstellungsrichtung der Platten ggf. auch in einer Horizontalebene (um eine senkrechte Achse) zu drehen, so daß die Flächen der photovoltaischen Elemente im wesentlichen in südliche Richtung ausgerichtet sind. Die Ausrichtung der einzelnen photovoltaischen Elemente kann dem Einzelfall angepaßt sein oder in einem Gradraster angeboten werden, wobei letzteres nur einmalige Vorrichtungen für die Produktion verlangt.

Als photovoltaische Elemente können kristalline (z. B. mono-, poly-, EFG-)Zellen oder amorphe Solarzellen (auf Dünnschicht- oder elektrochemischer Basis) verwendet werden, wobei es auch möglich ist, beide Solarzellenarten auf einer Bauplatte vorzusehen. Dann kann ausgenutzt werden, daß die amorphen PV-Elemente nach einer Vorbehandlung teilweise transparent sind, so daß die Bauplatte selbst wenigstens teilweise durchsichtig wird. Polykristalline Solarzellen hingegen sind nicht durchsichtig, haben aber den Vorteil eines höheren Wirkungsgrades. Sie können aber in der Bauplatte so angeordnet werden, daß zumindest bereichsweise die Durchsicht durch diese gegeben ist. Ebenfalls möglich ist die Verwendung von sogenannten bifacialen PV-Elementen. Diese können Licht von zwei gegenüberliegenden Seiten gleichzeitig ausnutzen.

Zur Erfindung gehörend ist auch ein Verfahren zur Herstellung von Schallschutzelementen für Lärmschutzwände mit im Inneren des Schallschutzelementes angeordneten PV-Elementen, wobei das Schallschutzelement bevorzugt aus Kunststoffglas auf Basis von PMMA besteht, eine Dicke im Bereich von 10 - 30 mm und eine Größe im Bereich bis zu ca. (2 x 3) m und größer aufweist, wobei das Verfahren die Schritte umfaßt
(a) Anordnen von PV-Elementen zwischen zwei aufeinandergelegten Kunststoffglasscheiben und
(b) lösbares Verbinden der Kunststoffglasscheiben.

Das lösbare Verbinden der Kunststoffglasscheiben umfaßt dabei u. a. alternativ oder miteinander kombiniert die Verbindungsschritte Kleben, thermisch Kleben, Verbinden mit Befestigungsmitteln, wie Schrauben, Nieten, Bolzen, weiteren mechanischen Befestigungsmitteln und/oder thermisches Fügen oder Pressen sowie ggf. das Abdichten der Randbereiche der Kunststoffglasscheiben.

Der Schritt des Anordnens der PV-Elemente zwischen den zwei aufeinandergelegten Kunststoffglasscheiben umfaßt in bevorzugter Verfahrensvariante eine besondere Vorbereitung der Scheiben, so daß einerseits entweder Vertiefungen in eine der Scheiben gefräst werden oder beim Herstellungsprozeß einer der Scheiben durch thermisches Pressen entsprechende Vertiefungen vorgesehen werden oder daß andererseits Schablonen, welche geeignete Durchbrechungen zur Aufnahme von PV-Elementen aufweisen, zwischen die Kunststoffglasscheiben gelegt werden.

In einer Abwandlung des Verfahrens der Erfindung ist es dabei bevorzugt, daß die PV-Elemente in Hohlräume eingelegt werden, die beim Aufeinanderlegen von Kunststoffglasscheiben zwischen je zwei Scheiben entstehen.

Zweckmäßig wird das Verfahren so fortgebildet, daß in wenigstens eine der Oberflächen, die beim Aufeinanderlegen der Kunststoffglasscheiben aufeinander zu liegen kommen, Vertiefungen gefräst oder thermisch gepreßt werden, die zur losen Aufnahme der PV-Elemente dienen.

Alternativ dazu wird das erfindungsgemäße Verfahren so variiert, daß die PV-Elemente in Hohlräume eingelegt werden, die durch die Anordnung von Abstandhaltern aus Kunststoffglas zwischen zwei aufeinandergelegten Kunststoffglasscheiben entstehen.

Besonders bevorzugte Ausgestaltungen umfassen dabei, daß Abstandhalter in Form einer Gitterschablone zwischen zwei Kunststoffglasscheiben angeordnet werden, wobei die Dicke der Schablone etwa der Dicke der PV-Elemente entspricht.

Die erfindungsgemäßen Schallschutzelemente oder Bauelemente dienen zur Erstellung von Lärmschutzwänden. Eine Lärmschutzwand kann vollständig aus den erfindungsgemäßen Bauplatten aufgebaut werden. Es ist auch denkbar, die erfindungsgemäßen Bauplatten mit an sich bekannten durchsichtigen Schalldämmbauplatten zu kombinieren, so daß insgesamt eine Lärmschutzwand geschaffen wird, die neben den üblicherweise geforderten Eigenschaften auch größere transparente Bereiche aufweist.

Im folgenden wird die Erfindung beispielhaft unter Bezugnahme auf die beigefügten Figuren erläutert.

In den Figuren zeigen
- Fig. 1: in Explosionsdarstellung eine schematische Schnittansicht/Seitenansicht eines ersten Ausführungsbeispieles eines bei einer Lärmschutzwand verwendeten Schallschutzelements (Lärmdämmplatte);
- Fig. 2: in Explosionsdarstellung eine schematische Schnittansicht/Seitenansicht eines zweiten Ausführungsbeispieles eines bei einer Lärmschutzwand verwendeten Schallschutzelements (Lärmdämmplatte);
- Fig. 3: in Explosionsdarstellung eine schematische Schnittansicht/Seitenansicht eines dritten Ausführungsbeispieles einer bei einer Lärmschutzwand verwendeten Lärmdämmplatte;
- Fig. 4: in Explosionsdarstellung eine schematische Schnittansicht/Seitenansicht eines vierten Ausführungsbeispieles einer bei einer Lärmschutzwand verwendeten Lärmdämmplatte.

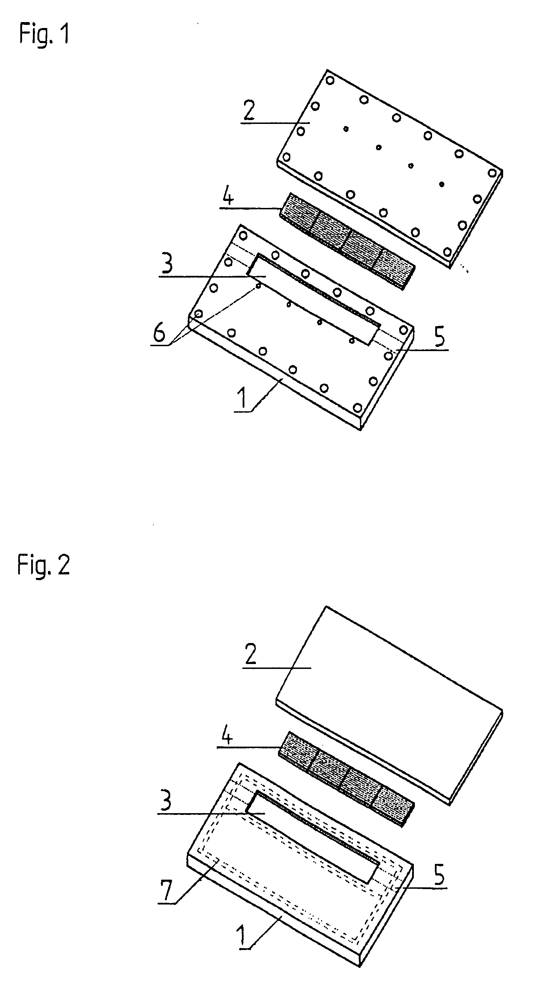

### Beispiel 1 - Figur 1

Mit einer transparenten organischen Glasplatte 1, die vorzugsweise aus Acrylglas (extrudiertes oder gegossenes Glas) oder aus Polycarbonat besteht, mit einer Dicke von 15 mm und einer weiteren Acrylglasplatte 2 mit einer Dicke von 5 mm ist eine transparente Lärmschutzwand aufgebaut. Dabei finden sich auf der Glasplatte 1 Vertiefungen 3 von ca. 1 mm bis 9 mm, diese Vertiefungen sollten ca. 5 % größer sein als die Dicke der zu plazierenden PV-Elemente (Solarzellen) oder PV-Module bis ca. 8 mm oder Rohmodule auf Dünnschichtbasis bis ca. 5 mm sein. (Z-Koordinate). Die X-Y Koordinaten (Fläche der Solarzellen) soll ca. 5 % größer als die Größe der Solarelemente sein, dabei handelt es sich im Beispiel um amorphe Rohmodule 4. Wesentlich ist nur, daß die verwendeten Module nicht mit Gießharz eingebettet sind und als Rohmodul verwendet werden. Zur Montage der Lärmschutzwand werden in die Vertiefungen der Platte 1 die Module bzw. Strings eingelegt, zum Rand der Platte befindet sich eine Zone von 5 cm, die keine Vertiefung für Solarzellen aufweist, sie dient u. a. zur Abdichtung des Lärmschutzelementes. Der Randbereich weist Kanäle 5 zur Aufnahme der Stromleitungen auf, die mit einem Kleber nach Plazierung der Kabel oder über Vakuumdurchführung oder Durchführungen aus der Isolierverglasung verschlossen werden. Nachdem die Rohmodule und die Kabel auf der Platte 1 plaziert wurden, wird die Platte 2 auf die Platte 1 gelegt und mit Schrauben befestigt. Zur Verschraubung werden 6 x 100 mm Messingschrauben verwendet, dabei wird die Platte 2 durchbohrt und in Platte 1 werden Bohrungen 6 mit Gewinde geschnitten. Die Kabelkanäle werden mit einem Kleber, z. B. Agovit 1900 von Degussa, versiegelt. Die Anzahl der Schrauben zur Fixierung der Platte 2 auf Platte 1 ist von der Anzahl der verwendeten Module und der Größe der Platte abhängig. In diesem Beispiel wurden im Abstand von 5 cm im Randbereich der Platte und um die Module Schraubverbindungen 6 angebracht. Zur vollständigen Abdichtung der Platte nach außen kann deren Randbereich erforderlichenfalls mit einer geeigneten Dichtmasse versiegelt werden.

### Beispiel 2 - Figur 2

Mit einer transparenten organischen Glasplatte 1, die vorzugsweise aus Acrylglas (extrudiertes oder gegossenes Glas) oder aus Polycarbonat besteht, mit einer Dicke von 15 mm und einer weiteren Acrylglasplatte 2 mit einer Dicke von 5 mm ist eine transparente Lärmschutzwand aufgebaut. Dabei finden sich auf der Glasplatte 1 Vertiefungen 3 von ca. 3 mm, diese Vertiefungen sollen ca. 5 % größer als die Dicke der zu plazierenden Solarzellen sein (Z-Koordinate). Die X-Y Koordinaten (Fläche der Solarzellen) soll ca. 5 % größer als die Größe der Solarmodule sein, dabei handelt es sich um amorphe Rohmodule 4. Wesentlich ist nur, daß die verwendeten Module nicht mit Gießharz eingebettet sind und als Rohmodul verwendet werden. Zur Montage der Lärmschutzwand werden in die Vertiefungen der Platte 1 die Module bzw. Strings eingelegt, zum Rand der Platte befindet sich eine Zone von 5 cm, die keine Vertiefung für Solarzellen aufweist, sie dient u. a. zur Abdichtung des Lärmschutzelementes. Der Randbereich weist Kanäle 5 zur Aufnahme der Stromleitungen auf, die mit einem Acryl-Kleber 6 nach Plazierung der Kabel verschlossen werden. Nachdem die Rohmodule und die Verbindungskabel auf der Platte 1 plaziert wurden, wird die Platte 2 auf die Platte 1 gelegt und mit einem für Acrylglas geeigneten transparenten doppelseitigen Klebeband fixiert, welches im Randbereich der Platte und um die Module (gestrichelte Linien 7) aufgetragen wird. Die Kabelkanäle werden mit einem Acryl-Kleber, z. B. Agovit 1900 von Degussa, versiegelt.

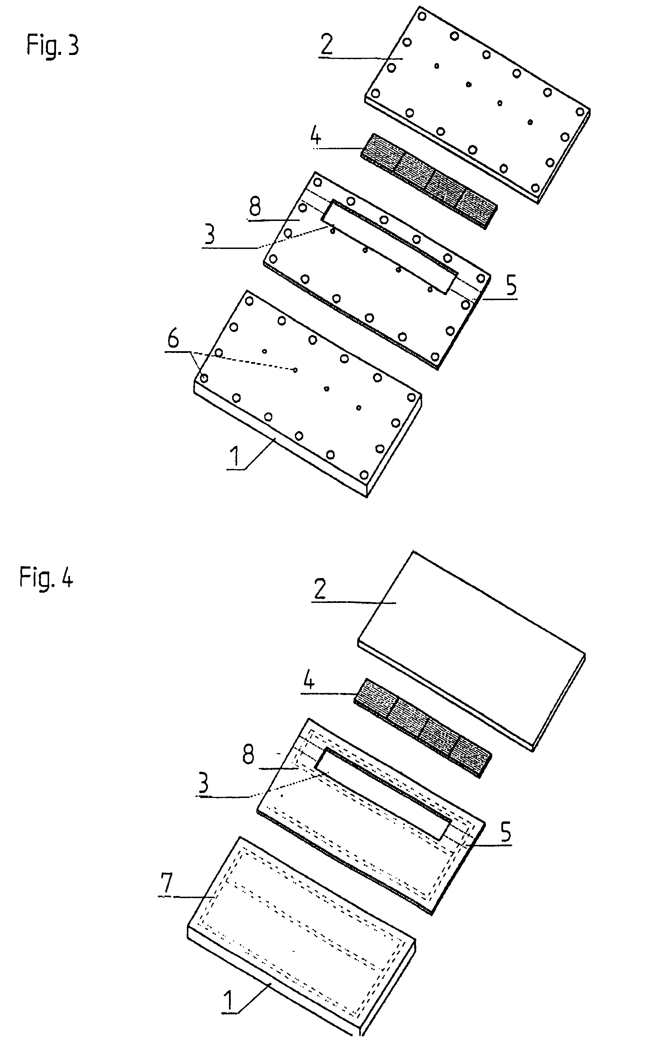

### Beispiel 3 - Figur 3

Mit einer transparenten organischen Glasplatte 1, die vorzugsweise aus Acrylglas (extrudiertes oder gegossenes Glas) oder aus Polycarbonat besteht, mit einer Dicke von 15 mm und einer weiteren Acrylglasplatte 8 mit einer Dicke von 1,5 mm und einer Acrylglasplatte 2 mit einer Dicke von 5 mm ist eine transparente Lärmschutzwand aufgebaut. In der Platte 8 befinden sich Aussparungen 3, die um 5 % größer sind als die zu plazierenden Strings (X-Y Koordinaten), dabei handelt es sich um kristalline Module 4 auf der Basis kristalliner (z. B. poly-, mono-, EFG-)Zellen oder Dünnschichtzellen (PV-Elemente auf Dünnschichtbasis oder elektrochemischer Basis). Wesentlich ist nur, daß die verwendeten Module 4 nicht mit Gießharz eingebettet sind und als Rohmodul verwendet werden. Zur Montage der Lärmschutzwand wird die Platte 8 auf die Platte 1 gelegt, dann die Strings 4 in die Aussparungen 3 und die Verkabelung in die Kabelkanäle 5 der Platte 8 gelegt und die Platte 2 auf die Platte 8 gelegt. Zum Rand der Platte 8 befindet sich in einer Zone von 5 cm keine Solarzellen 4, sie dient u. a. zur Abdichtung des Lärmschutzelementes. Der Randbereich weist Kanäle 5 zur Aufnahme der Stromleitungen auf, die mit einem Kleber nach Plazierung der Kabel verschlossen werden. Das Plattenpaket, bestehend aus den Platten 1, 8, 2, wird mit Schrauben in den dafür vorgesehenen Bohrungen 6 im Abstand von 5 cm wie im Beispiel 1 fixiert.

### Beispiel 4 - Figur 4

Mit einer transparenten organischen Glasplatte 1, die vorzugsweise aus Acrylglas (extrudiertes oder gegossenes Glas) oder aus Polycarbonat besteht, mit einer Dicke von 15 mm und einer weiteren Acrylglasplatte 8 mit einer Dicke von 3 mm und einer Acrylglasplatte 2 mit einer Dicke von 5 mm ist eine transparente Lärmschutzwand aufgebaut. In der Platte 8 befinden sich Aussparungen 3, die um 5 % größer sind als die zu plazierenden Strings (X-Y Koordinaten), dabei handelt es sich um amorphe Rohmodule 4. Wesentlich ist nur, daß die verwendeten Module nicht mit Gießharz eingebettet sind und als Rohmodul verwendet werden. Zur Montage der Lärmschutzwand wird die Platte 8 auf die Platte 1 gelegt, dann die Strings in die Aussparungen 3 und die Verkabelung in die Kabelkanäle 5 der Platte 8 plaziert und die Platte 2 auf die Platte 8 gelegt. Zum Rand der Platte 8 befindet sich in einer Zone von 5 cm keine Solarzellen, sie dient u. a. zur Abdichtung des Lärmschutzelementes. Der Randbereich weist Kanäle 5 zur Aufnahme der Stromleitungen auf, die mit einem Kleber 7 nach Plazierung der Kabel verschlossen werden. Das Plattenpaket besteht aus den Platten 1, 8, 2 und wird mit einem lösbaren Acrylglas-Kleber bzw. Klebeband fixiert.

Die in der vorstehenden Beschreibung, in den Zeichnungen sowie den Ansprüchen offenbarten Merkmale der Erfindung können sowohl einzeln als auch in beliebiger Kombination für die Verwirklichung der Erfindung in ihren verschiedenen Ausführungsformen wesentlich sein. Weitere Vorteile sowie Ausführungsformen der Erfindung können sich aus den nachfolgenden Patentansprüchen ergeben.

### Bezugszeichenliste

- 1: Kunststoffglasscheibe
- 2: Kunststoffglasscheibe
- 3: Vertiefungen in 1
- 4: PV-Elemente (Solarzellen)
- 5: Kanäle für Leitungen
- 6: Bohrungen mit Gewinde
- 7: Kleber
- 8: Zwischenplatte, Rahmen, Schablone, Gitter aus Kunststoffglas

## Patentansprüche

1. Schallschutzelement für Lärmschutzwände mit im Inneren des Schallschutzelementes angeordneten photovoltaischen Elementen (4), wobei das Schallschutzelement aus Kunststoffglas besteht, eine Dicke im Bereich von 10 bis 30 mm und eine Größe im Bereich von bis zu 2 x 3 m aufweist,
**dadurch gekennzeichnet,**
**daß** das Schallschutzelement aus zwei oder mehr aufeinandergelegten lösbar miteinander verbundenen Kunststoffglasscheiben (1, 2) besteht, zwischen welche die photovoltaischen Elemente (4) lose eingelegt und durch die Verbindung der Scheiben fixiert sind.

2. Schallschutzelement nach Anspruch 1,
**dadurch gekennzeichnet,**
**daß** die Kunststoffglasscheiben (1, 2) miteinander verklebt sind.

3. Schallschutzelement nach Anspruch 2,
**dadurch gekennzeichnet,**
**daß** die Kunststoffglasscheiben (1, 2) miteinander thermisch verklebt sind.

4. Schallschutzelement nach einem der vorhergehenden Ansprüche,
**dadurch gekennzeichnet,**
**daß** die Kunststoffglasscheiben (1, 2) mit mechanischen Befestigungsmitteln, wie Schrauben, Bolzen, Nieten o. ä., verbunden sind.

5. Schallschutzelement nach einem der vorhergehenden Ansprüche,
**dadurch gekennzeichnet,**
**daß** die miteinander verbundenen Kunststoffglasscheiben (1, 2) in ihren Randbereichen (5) zusätzlich abgedichtet sind.

6. Schallschutzelement nach einem der vorhergehenden Ansprüche,
**dadurch gekennzeichnet,**
**daß** in wenigstens einer der Oberflächen, die beim Verbinden der Kunststoffglasscheiben (1, 2) aufeinanderliegen, Aussparungen oder Vertiefungen (3) zur Aufnahme der photovoltaischen Elemente (4) vorgesehen sind.

7. Schallschutzelement nach einem der Ansprüche 1 bis 5,
**dadurch gekennzeichnet,**
**daß** zwischen zwei Kunststoffglasscheiben (1, 2) eine zur Aufnahme der Photovoltaik-Elemente (4) ausgebildete Schablone (8) aus Kunststoffglas eingelegt ist.

8. Schallschutzelement nach Anspruch 7,
**dadurch gekennzeichnet,**
**daß** die Schablone (8) in Form eines Rahmens oder Gitters ausgebildet ist, welches Durchbrechungen aufweist, die an die Größe der Photovoltaik-Elemente (4) angepaßt sind, wobei die Dicke des Rahmens (8) in etwa der Dicke der Photovoltaik-Elemente (4) entspricht.

9. Schallschutzelement nach einem der vorhergehenden Ansprüche,
**dadurch gekennzeichnet,**
**daß** es sowohl kristalline Photovoltaik-Elemente, amorphe oder andere Photovoltaik-Elemente auf Dünnschicht- oder elektrochemischer Basis (4) enthält.

10. Schallschutzelement nach einem der Ansprüche 1 bis 8,
**dadurch gekennzeichnet,**
**daß** es bifaciale Photovoltaik-Elemente (4) aufweist.

11. Verfahren zur Herstellung eines Schallschutzelementes für Lärmschutzwände mit im Inneren des Schallschutzelementes angeordneten Photovoltaik-Elementen, wobei das Schallschutzelement aus Kunststoffglas besteht, eine Dicke im Bereich von 10 bis 30 mm und eine Größe im Bereich von bis zu 2 x 3 m aufweist, und wobei das Verfahren die Schritte umfaßt
(a) Anordnen von Photovoltaik-Elementen zwischen zwei aufeinandergelegten Kunststoffglasscheiben und
(b) das lösbare Verbinden der Kunststoffglasscheiben, so dass die Photovoltaik-Elemente lose zwischen den Scheiben eingelegt sind und durch die Verbindung der Scheiben fixiert sind.

12. Verfahren nach Anspruch 11,
**dadurch gekennzeichnet,**
**daß** die Kunststoffglasscheiben zum lösbaren Verbinden miteinander thermisch verklebt werden.

13. Verfahren nach Anspruch 11 oder 12,
**dadurch gekennzeichnet,**
**daß** die Kunststoffglasscheiben zur lösbaren Verbindung miteinander durch mechanische Befestigungsmittel, wie Schrauben, Bolzen oder Nieten, verbunden werden.

14. Verfahren nach einem der Ansprüche 11 bis 13,
**dadurch gekennzeichnet,**
**daß** die PV-Elemente in Hohlräume eingelegt werden, die beim Aufeinanderlegen von Kunststoffglasscheiben zwischen je zwei Scheiben entstehen.

15. Verfahren nach Anspruch 14,
**dadurch gekennzeichnet,**
**daß** in wenigstens eine der Oberflächen, die beim Aufeinanderlegen der Kunststoffglasscheiben aufeinander zu liegen kommen, Vertiefungen gefräst oder thermisch gepreßt werden, die zur losen Aufnahme der PV-Elemente dienen.

16. Verfahren nach einem der Ansprüche 11 bis 13,
**dadurch gekennzeichnet,**
**daß** die PV-Elemente in Hohlräume eingelegt werden, die durch die Anordnung von Abstandhaltern aus Kunststoffglas zwischen zwei aufeinandergelegten Kunststoffglasscheiben entstehen.

17. Verfahren nach Anspruch 16,
**dadurch gekennzeichnet,**
**daß** Abstandhalter in Form einer Gitterschablone zwischen zwei Kunststoffglasscheiben angeordnet werden, wobei die Dicke der Schablone etwa der Dicke der PV-Elemente entspricht.

## Claims

1. Noise protection elements for soundproofing walls with photovoltaic elements (4) disposed in the interior of the noise protection element, wherein the noise protection element comprises synthetic glass and has a thickness in the range from 10 to 30 mm and a size in the range of up to 2 x 3 m, **characterised in that** the noise protection element comprises two or more synthetic glass panes (1, 2), placed one on top of the other and releasably connected together, between which the photovoltaic elements (4) are placed loosely and are fixed by the joining of the discs.

2. A noise protection element according to claim 1, **characterised in that** the synthetic glass panes (1, 2) are glued together.

3. A noise protection element according to claim 2, **characterised in that** the synthetic glass panes (1, 2) are thermally glued together.

4. A noise protection element according to one of the preceding claims, **characterised in that** the synthetic glass panes (1, 2) are connected together by means of mechanical attachment means such as screws, bolts, rivets or similar.

5. A noise protection element according to one of the preceding claims, **characterised in that** the joined synthetic glass panes (1, 2) are additionally sealed in their edge areas (5).

6. A noise protection element according to one of the preceding claims, **characterised in that** cut-outs or recesses (3) are provided to receive the photovoltaic elements (4) in at least one of the surfaces which lie one on top of the other when the synthetic glass panes (1, 2) are joined.

7. A noise protection element according to one of claims 1 to 5, **characterised in that** a stencil (8) of synthetic glass is inserted between two synthetic glass panes (1, 2) to accept the photovoltaic elements (4).

8. A noise protection element according to claim 7, **characterised in that** the stencil (8) is configured in the form of a framework or a grid which has penetrations which are adapted to the size of the photovoltaic elements (4) wherein the thickness of the frame (8) approximately corresponds to the thickness of the photovoltaic elements (4).

9. A noise protection element according to one of the preceding claims, **characterised in that** it contains both crystalline, amorphous or other types of photovoltaic elements on a thin layer or electrochemical basis (4).

10. A noise protection element according to one of claims 1 to 8, **characterised in that** it has bifacial photovoltaic elements (4).

11. A process for the production of a noise protection element for soundproofing walls with photovoltaic elements disposed in the interior of the noise protection element, wherein the noise protection element comprises synthetic glass and has a thickness in the range from 10 to 30 mm and a size in the range of up to 2 x 3 m, and wherein the process includes the following steps:
(a) arrangement of the photovoltaic elements between two synthetic glass panes which are placed one on top of the other and
(b) releasably connecting the synthetic glass panes so that the photovoltaic elements are placed loosely between the panes and are fixed by the joining of the panes.

12. A process according to claim 11, **characterised in that** the synthetic glass panes are thermally glued together for a releasable connection.

13. A process according to claim 11 or 12, **characterised in that** the synthetic glass panes are connected together by mechanical fastening means such as screws, bolts or rivets.

14. A process according to one of claims 11 to 13, **characterised in that** the PV elements are placed in cavities which occur between two panes, in each case, when the synthetic glass panes are placed one on top of the other.

15. A process according to claim 14, **characterised in that** in at least one of the surfaces which lie against one another when the synthetic glass panes are placed one on top of the other, recesses are milled or thermally pressed which serve for loose acceptance of the PV elements.

16. A process according to one of claims 11 to 13, **characterised in that** the PV elements are placed in cavities which occur from the arrangement of synthetic glass spacers between two synthetic glass panes placed one on top of the other.

17. A process according to claim 16, **characterised in that** spacers in the form of a grid stencil are placed between two synthetic glass panes wherein the thickness of the stencils approximately corresponds to the thickness of the PV elements.

## Revendications

1. Élément d'isolation acoustique pour des murs anti-bruit avec des éléments photovoltaïques (4) placés à l'intérieur de l'élément d'isolation acoustique, l'élément d'isolation acoustique étant en verre synthétique, présentant une épaisseur comprise entre 10 et 30 mm et une dimension pouvant aller jusqu'à 2 x 3 m,
**caractérisé en ce que**
l'élément d'isolation acoustique est composé de deux plaques de verre synthétique (1, 2) ou plus qui sont superposées, reliées les unes aux autres de façon détachable et entre lesquelles les éléments photovoltaïques (4) sont introduits de façon lâche et sont fixés par la liaison des plaques.

2. Élément d'isolation acoustique selon la revendication 1,
**caractérisé en ce que**
les plaques de verre synthétique (1, 2) sont collées l'une à l'autre.

3. Élément d'isolation acoustique selon la revendication 2,
**caractérisé en ce que**
les plaques de verre synthétique (1, 2) sont thermocollées l'une à l'autre.

4. Élément d'isolation acoustique selon l'une des revendications précédentes,
**caractérisé en ce que**
les plaques de verre synthétique (1, 2) sont reliées par des moyens de fixation mécaniques comme des vis, des boulons, des rivets ou autres.

5. Élément d'isolation acoustique selon l'une des revendications précédentes,
**caractérisé en ce que**
les plaques de verre synthétique (1, 2) reliées les unes aux autres sont en outre rendues étanches dans leurs zones périphériques (5).

6. Elément d'isolation acoustique selon l'une des revendications précédentes,
**caractérisé en ce que**
dans au moins l'une des surfaces qui sont superposées lors de la liaison des plaques de verre synthétique (1, 2), on a prévu des évidements ou des renfoncements (3) pour recevoir les éléments photovoltaïques (4).

7. Élément d'isolation acoustique selon l'une des revendications 1 à 5,
**caractérisé en ce qu'**
entre deux plaques de verre synthétique (1, 2), on place un moule (8) en verre synthétique formé pour recevoir les éléments photovoltaïques (4).

8. Élément d'isolation acoustique selon la revendication 7,
**caractérisé en ce que**
le moule (8) a la forme d'un cadre ou d'une grille lequel présente des cavités qui sont ajustées à la dimension des éléments photovoltaïques (4), l'épaisseur du cadre (8) correspondant à peu près à l'épaisseur des éléments photovoltaïques (4).

9. Élément d'isolation acoustique selon l'une des revendications précédentes,
**caractérisé en ce qu'**
il contient aussi bien des éléments photovoltaïques cristallins, des éléments photovoltaïques amorphes ou autres, sur une base (4) à couche mince ou électrochimique.

10. Élément d'isolation acoustique selon l'une des revendications 1 à 8,
**caractérisé en ce qu'**
il présente des éléments photovoltaïques (4) bifaciaux.

11. Procédé pour fabriquer un élément d'isolation acoustique pour des murs anti-bruit avec des éléments photovoltaïques placés à l'intérieur de l'élément d'isolation acoustique, l'élément d'isolation acoustique étant de préférence en verre synthétique, présentant une épaisseur située entre 10 et 30 mm et une dimension pouvant aller jusqu'à environ 2 x 3 m, le procédé comprenant les étapes suivantes :
(a) placement d'éléments photovoltaïques entre deux plaques de verre synthétique superposées, et
(b) liaison détachable des plaques de verre synthétique de sorte que les éléments photovoltaïques sont placés de façon lâche entre les plaques et fixés par la liaison des plaques.

12. Procédé selon la revendication 11,
**caractérisé en ce que**
les plaques de verre synthétique pour la liaison détachable sont thermocollées les unes aux autres.

13. Procédé selon la revendication 11 ou 12,
**caractérisé en ce que**
les plaques de verre synthétique pour la liaison détachable sont liées les unes aux autres par des moyens de fixation mécaniques comme des vis, des boulons ou des rivets.

14. Procédé selon l'une des revendications 11 à 13,
**caractérisé en ce que**
les éléments PV sont placés dans des cavités qui apparaissent entre les deux plaques lors de la superposition des plaques de verre synthétique.

15. Procédé selon la revendication 14,
**caractérisé en ce que**
dans au moins l'une des surfaces qui entrent en contact lors de la superposition des plaques de verre synthétique, on réalise par fraisage ou par pressage thermique des renfoncements qui servent à recevoir de façon détachable les éléments PV.

16. Procédé selon l'une des revendications 11 à 13,
**caractérisé en ce que**
les éléments PV sont placés dans des cavités qui résultent de l'insertion de pièces d'écartement en verre synthétique entre deux plaques de verre synthétique superposées.

17. Procédé selon la revendication 16,
**caractérisé en ce que**
l'on insère des pièces d'écartement en forme de moule à grille entre deux plaques de verre synthétique, l'épaisseur des moules correspondant à peu près à l'épaisseur des éléments PV.
